# EUROPEAN PATENT APPLICATION

(11) **EP 1 914 940 A1**
(43) Date of publication of application: **23.04.2008**
(21) Application number: 07019482.4
(22) Date of filing: 04.10.2007
(51) Int. Cl.: H04L 12/26, H04N 17/00

(54) **Method and system for IPTV test, and IPTV test apparatus**

(30) Priority: 19.10.2006 CN 200610149969
(71) Applicant: Huawei Technologies Co., Ltd., Longgang District Shenzhen Guangdong 518129 (CN)
(72) Inventor: Hu, Hanqiang, 518129 Guangdong (CN)
(74) Representative: Manitz, Finsterwald & Partner GbR

(57) **Abstract**

Embodiment of the present invention disclose a method for Internet Protocol Television (IPTV) test, the method includes: connecting to a user port to be tested of an IPTV access apparatus via an access matrix; accessing an IP carrier network; downloading channel information from an IPTV network; receiving IPTV media contents according to the channel information; and analyzing the channel information and the IPTV media contents, and generating an IPTV test result. Embodiment of the present invention also provides a system for IPTV test and a test apparatus. In embodiment of the present invention, automatic IPTV test is implemented without any operation on the user side. According to embodiments of the present invention, tests may be done at more than one user port via the Test Access Matrix. In addition, in embodiments of the present invention, packet capturing and analyzing at Set Top Boxes (STBs) are not required, so the test does not depend on operation of the STBs, which brings more convenience to the testers.

## Description

### Field of the Invention

The present invention relates to Internet Protocol Television (IPTV) test technology, and particularly, to a method and system for IPTV test and an IPTV test apparatus.

### Background of the Invention

IPTV is a kind of Internet service developed along with such technologies as broadband networks, streaming transmission and coding/decoding. The IPTV is referred to as Triple Play (synchronous voice, video and data transmissions) in the industry. At present, the IPTV service is developing rapidly around the world, and operators generally regard the IPTV service as a new growth point of profit in fixed broadband network services. The IPTV has high capacity and a large number of new internet services including live TV, time-shifted TV, near video on demand (NVOD), video on demand (VOD), fast forward, fast rewind, real-time recording etc., which requires high service quality of IPTV service. As a result, operators pay great attention to guaranteeing the Quality of Service (QoS) of IPTV service and providing real-time, fluent, high definition audio and video for users. Hence the IPTV service needs a test apparatus to assess the quality of IPTV service, further to locate and repair malfunctions, and thereby improve the QoS of IPTV.

The development of IPTV test technology has just started, so there's no uniform technical scheme and few companies and products may support the IPTV test. And at present, handheld instruments on user terminals are used to capture and analyze packets of the IPTV service to accomplish an IPTV test.

However limitations of those handheld instruments include: (1) testers have to enter into users' houses, connect the handheld instruments to the Set Top Box (STB) manually before performing the test, i.e. an automatic test in the central office is not supported by the handheld instrument; (2) tests are done by capturing and analyzing packets at STB in operation, instead of on the IPTV network, therefore the handheld instruments will be of no use when the STB does not work; (3) the test is implemented at one individual user terminal at a time instead of multiple terminals simultaneously.

### Summary of the Invention

Embodiments of the present invention disclose a method and system for IPTV test, and a test apparatus.

A method for IPTV test includes the following processes: connecting to a user port to be tested of an IPTV access apparatus via an access matrix; accessing an IP carrier network; downloading channel information from an IPTV network; receiving IPTV media contents according to the channel information; analyzing the channel information and the IPTV media contents, and generating an IPTV test result.

A system for IPTV test includes: a test apparatus, configured to connect to a user port to be tested of an IPTV access apparatus via an access matrix, access an IP carrier network, download channel information from an IPTV network, receive IPTV media contents according to the channel information, analyze the channel information and the IPTV media contents, and generate an IPTV test result.

A test apparatus includes: an access module, configured to access an IP carrier network; a receiving module, configured to download channel information from an IPTV network, and receive IPTV media contents according to the channel information; and a test module, configured to analyze the channel information and the IPTV media contents, and generate an IPTV test result.

In embodiments of the present invention, the test apparatus is connected with user ports to be tested of the IPTV access apparatus in a central office, accesses the IPTV network as a simulation of STB, receives the IPTV media contents, performs test items, and generates test results. Therefore, in embodiments of the present invention, an automatic test in the central office can be implemented without any other operation on the user side. Because connections to the IPTV access apparatus, such as a Digital Subscriber Line Access Multiplexer (DSLAM) in the central office, are established, tests may be done via an external access matrix connected to multiple user ports, which means that multiple users can be tested. In addition, in embodiments of the present invention, there is no need to capture and analyze packets at STBs, and the test does not depend on an operation of STBs. Furthermore, in embodiments of the present invention, a variety of IPTV tests may be offered, such as a test on channel scanning, a test on maximum rate/minimum rate/ average rate of audio and video packets, a test on packet jitter of audio and video packets, a test on packet loss ratio of audio and video packets, a test on Internet Group Management Protocol (IGMP) delay.

### Brief Description of the Drawings

Figure 1 is a schematic diagram illustrating a structure of the network in the IPTV test in a first embodiment of the present invention.
Figure 2 is a flow chart illustrating an IPTV test process implemented in the network.
Figure 3 is a flow chart illustrating a process of obtaining channel information.
Figure 4 is a flow chart illustrating a test process of an individual test item.

### Detailed Description of the Invention

The detailed description of the embodiments of the present invention is hereinafter given with reference to the figures of the present invention.

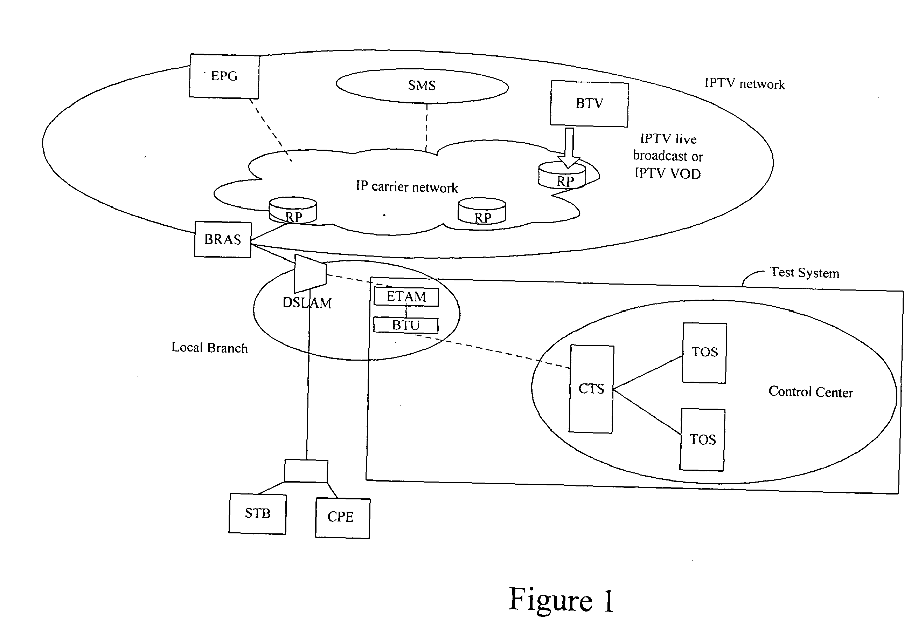

Figure 1 shows a structure of the network in the IPTV test in a first embodiment of the present invention.

As shown in Figure 1, the upper part of Figure 1 is an IPTV network, and the IPTV network mainly includes an IP carrier network, a Rendezvous Point (RP), a Broadband TV (BTV) equipment, a Service management System (SMS), an Electronic Program Guide (EPG) equipment, and a Broadband Remote Access Server (BRAS). The BTV equipment serves as a content service system of the IPTV network. The upper part of the Figure 1 is disclosed in the prior art, so no further description will be provided herein. Moreover, the IPTV network in Figure 1 is just an illustrative example, and those skilled in the art should be aware that the technical scheme of an embodiment of the present invention may be applied to many kinds of IPTV networks.

A local branch connected with the IPTV network mainly includes a DSLAM, an External Test Access Matrix (ETAM) and a Broadband Test Unit (BTU). The local branch is connected with the BRAS via the DSLAM, and thereby is connected with the IPTV network. The ETAM and the BTU are branches of the test system. The BTU is a broadband test apparatus performing IPTV test in the central office. And the BTU can perform the IPTV test to the IPTV live broadcast or the IPTV VOD. The ETAM offers the BTU a broadband testing bus, and accesses the IP carrier network via connections with each DSLAM user port, and thereby accesses the IPTV network to implement the IPTV test.

The BTU includes an access module, a receiving module and a test module. The access module is used for accessing the IP carrier network, e.g., the access module accesses the IP carrier network through Point to Point Protocol over Ethernet (PPPOE) authentication or Dynamic Host Configuration Protocol (DHCP) authentication. The receiving module is used for downloading channel information from the IPTV network, receiving IPTV media contents according to the channel information, and providing the test module with the channel information and the IPTV media contents. The test module is used for analyzing the channel information and the IPTV media contents, and generating results of the IPTV test items. When the IPTV live media is played, the channel information refers to a channel list; and when the IPTV VOD program is played, the channel information refers to a VOD program Uniform Resource Locator (URL).

Because multiple IPTV test items may be needed, the BTU may further include some modules for the IPTV test items. For example, when the IPTV live media is played, at least one of a channel scanning test module, an audio and video packet rate test module, an audio and video packet jitter test module, an audio and video packet loss ratio test module, and an IGMP delay test module can be included in the BTU; when the IPTV VOD program is played, at least one of the channel scanning test module, the audio and video packet rate test module, the audio and video packet jitter test module, and the audio and video packet loss ratio test module can be included in the BTU. The channel scanning test module is used for performing channel scanning over all IPTV channels, marking the channels providing IPTV live media or VOD program as active, and marking the channels not providing IPTV live media or VOD program as idle. The audio and video packet rate test module is used for calculating a maximum packet rate, a minimum packet rate and an average packet rate of the channels. The audio and video packet jitter test module is used for calculating the packet jitter of the channels. The audio and video packet loss ratio test module is used for calculating audio and video packet loss ratio of the channels. The IGMP delay test module is used for calculating IGMP delay of audio and video packets of the channels. Test methods adopted by the modules will be described in the following description in detail.

As shown in Figure 1, a Control Center includes a Centralized Test Server (CTS) and a Test Operator Station (TOS).

The IPTV test system includes a Control Center, and BTUs and ETAMs in branch offices. As described above, the Control Center includes a CTS and a TOS. The TOS is a tester oriented user side test platform that receives test control information from the testers, and displays results to the testers. The CTS is used for managing and scheduling BTUs and ETAMs in all branches for the test. The CTS may be an individual server or a server group including several servers, and when a server group is employed, an F5 load balancer is used to perform load balancing among servers in the server group. Capacity of the CTS may be flexibly extended by deploying a group of the load balancers according to the number of branch offices to be tested and the number of the BTUs and the ETAMs in the network.

Figure 1 also shows a STB and a Customer Premises Equipment (CPE) used at the user side, which is similar to prior art.

In the system in Figure 1, the ETAM is a standalone apparatus and is a part of the IPTV test system. The ETAM may also be equipped in an IPTV access apparatus, such as DSLAM. And in such a case, the IPTV test system no longer needs a standalone ETAM.

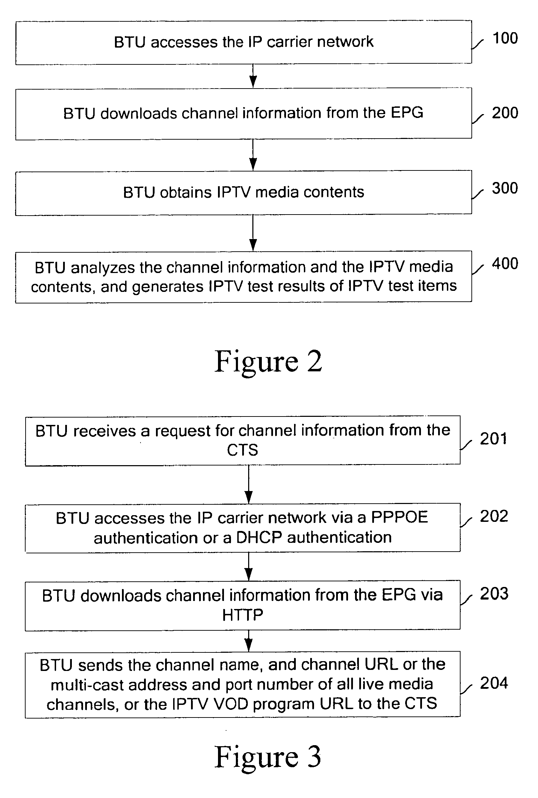

Figure 2 is a flow chart illustrating the process of the IPTV test. In the process of the IPTV test, a BTU is connected with the IPTV network as a simulation of a STB to perform the IPTV test. As shown in Figure 2, the IPTV test performed by the system includes the following processes.

Block 100: A TOS in a Control Center initiates a request for automatic IPTV test, and sends a test command to a CTS. The CTS controls an ETAM for line capture via the BTU, so that the CTS connects the BTU with user ports of the DSLAM corresponding to the subscriber numbers to be tested, and schedules and sends an IPTV test command to the BTU. The BTU accesses an IP carrier network via a PPPOE or DHCP authentication.

Block 200: The BTU sends a request carrying an IPTV subscriber account in Hypertext Transfer Protocol (HTTP) to an EPG in the IPTV network to download channel information from the EPG. The EPG returns the channel information if the IPTV subscriber account is authenticated by the EPG. When the IPTV live media is played, the channel information is a channel list including: a channel ID, a channel name and a Uniform Resource Locator (URL) of each live media channel. Alternatively, the URL of each live channel can be multi-cast address and port number of each live media channel. When the IPTV VOD program is played, the channel information is an IPTV VOD program URL.

The process of the BTU downloading the channel information from the EPG is illustrated in Figure 3, which includes the following processes.

Block 201: The CTS sends a request for channel information to the BTU, and the BTU receives the request from the CTS.

Block 202: The BTU accesses the IP carrier network via a PPPOE authentication or a DHCP authentication. In practice, any other practical IP carrier network access methods may be applicable for the BTU to access the IP carrier network.

Block 203: The BTU downloads the channel information from the EPG via HTTP. When the IPTV live media is played, the channel information is the channel list including: the channel ID, the channel name and the URL of each live broadcast channel. Alternatively, the URL of each live media channel can be multi-cast address and port number of each live media channel. When the IPTV VOD program is played, the channel information is the IPTV VOD program URL.

Block 204: The BTU sends the channel IDs, channel names, channel URLs, multi-cast addresses and port numbers of all live media channels, or the IPTV VOD program URL to the CTS to initiate IPTV test items.

The downloading of the channel information is accomplished in the above processes in Blocks 201 to 204.

Block 300: The BTU obtains IPTV media contents.

When the IPTV live media is played, the channel list is downloaded by the BTU, and if the URL of the channel is included in the channel list, the BTU interacts, according to the URL, with the content service system in the IPTV network via Real Time Streaming Protocol (RSTP) to obtain the multi-cast address and port number of the channel, joins a corresponding multi-cast group via IGMP, and receives the IPTV live media contents at real time.

If the multi-cast address and port number of the live media channel are included in the channel list, the BTU directly joins the multi-cast group via an IGMP and receives the IPTV live media contents at real time.

The audio and video packets of the IPTV live media contents received are encapsulated according to a media stream transport protocol. One of the two most widely employed media stream transport protocols in the industry is a Real Time Transport Protocol (RTP)/Real Time Control Protocol (RTCP) offered by the Internet Streaming Media Alliance (ISMA). The other media stream transport protocol is a Transport Stream (TS) protocol defined in the International Telecommunications Union (ITU)-13818 standard, in which the payload is audio and video data encoded in a Motion Picture Expert Group (MPEG)-2 or MPEG-4 format. The two above protocols are just illustrative examples in the embodiments of the present invention, and shall not be used for limiting the scope of protection of the embodiments of the present invention.

When the IPTV VOD program is played, the IPTV VOD program URL is downloaded by the BTU, and the BTU interacts with the IPTV VOD program server according to the IPTV VOD program URL, performs media negotiation with the VOD program server and obtains the audio and video packets ordered.

Block 400: The BTU analyzes the channel information and the IPTV media contents, and generates IPTV test results of IPTV test items accordingly.

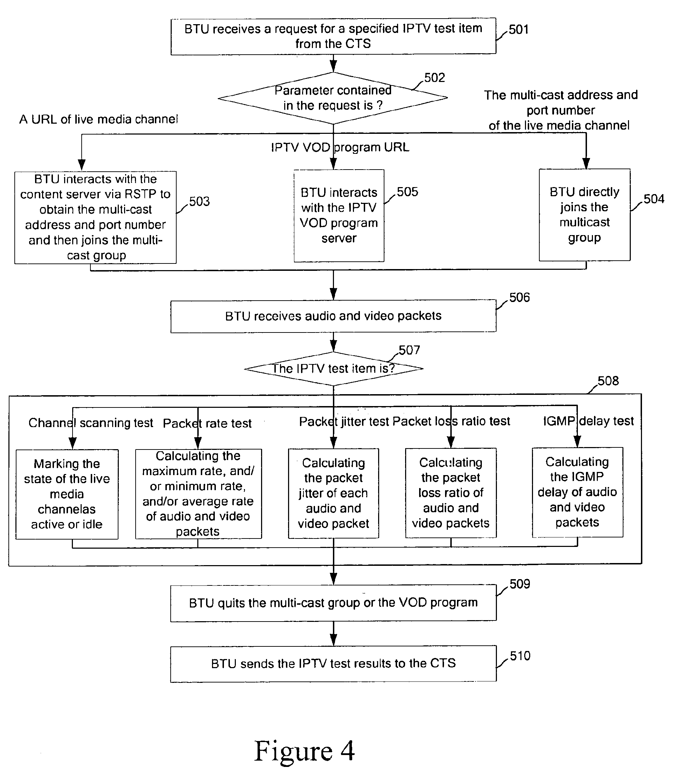

Detailed description of several IPTV test items is hereinafter given to further illustrate the processes in the Block 300 and Block 400. As shown in Figure 4, the process includes the following processes.

Block 501: The CTS transmits a request for an IPTV test item, and the request contains the URL of the live media channel to be tested, the multi-cast address and port number of the live media channel to be tested, or the IPTV VOD program URL. The request also contains identity of the IPTV test item, such as the code or flag of the test item. The BTU receives the request for the IPTV test item from the CTS.

Block 502: The BTU determines whether the parameter contained in the request for the IPTV test item is the URL of the live media channel to be tested, or is the multi-cast address and port number of the live media channel to be tested, or is the IPTV VOD program URL. If the parameter is the URL of the live media channel to be tested, the process in Block 503 shall be performed; if the parameter is the multi-cast address and port number of the live media channel to be tested, the process in Block 504 shall be performed. If the parameter is the IPTV VOD program URL, the process in Block 505 shall be performed.

Block 503: The BTU interacts, according to the URL of the live media channel to be tested, with the content server in the IPTV network via a RSTP to obtain the multi-cast address and port number of the live media channel, and joins the multi-cast group via an IGMP. Then the process in Block 506 shall be performed.

Block 504: The BTU directly joins the multi-cast group according to the multi-cast address and port number of the live media channel.

Block 505: The BTU interacts, according to the IPTV VOD program URL, with the IPTV VOD program server via the RSTP.

Block 506: The BTU receives audio and video packets of the IPTV media contents. If the IPTV live media is played, the BTU receives multi-cast audio and video packets at real time upon joining the multi-cast group; if the IPTV VOD program is played, the BTU receives audio and video packets ordered.

Block 507: The BTU determines the IPTV test item according to the request, and carries out corresponding operations in Block 508.

Block 508: The BTU performs corresponding IPTV test according to the test item, and generates a result. Some of the IPTV test items are described below.

If the IPTV test item is a channel scanning test, the BTU will obtain the IPTV live media or VOD program of each media channel one by one. If a certain media channel provides live media or VOD program, the media channel is scanned. The BTU will mark the state of the IPTV media channel or VOD program as active; otherwise, mark the IPTV media channel or VOD program as idle. When the IPTV live media is played, the media channel is in the channel list; when the IPTV VOD program is played, the media channel is indicated by the VOD program URL.

If the IPTV test item is an audio and video packet rate test, the BTU will calculate a maximum rate, a minimum rate and an average rate of the audio and video packets according to the size in byte and interval of the received audio and video packets. For example, the rate of audio and video packet is obtained by dividing the size of the audio and video packet in byte by the interval at which the packet is received. And the maximum and minimum rate may be obtained by comparing the rates of audio and video packets received. In addition, the average rate may be acquired by dividing the total size of all packets received in byte in a specified period of time by the interval between the first packets received and the last packets received in the period of time.

If the IPTV test item is an audio and video packet jitter test, the process will be as follows. Because every audio and video packet has different network delay in transmission, packet jitter occurs when the audio and video packets of different delays arrive at a receiver. In ideal circumstances, network delay remains constant and the ideal arriving time of packets may be obtained by adding the encoding time of the audio and video packets and the constant delay. The BTU may set up a coordinate system, the y-axis of the coordinate system represents the encoding time of the audio and video packets, and the x-axis of the coordinate system represents the actual arriving time of the packets. Corresponding points in the coordinate system are marked according to the encoding time and actual arriving time of the packets, and then algorithms such as least-squares line fitting method are used to fit those points into a line. The intersection of the line and the x-axis marks the value of ideal arriving time of the packets. And the horizontal distance between a point and the line indicates the deviation of the actual arriving time of corresponding packet from the ideal arriving time, namely, packet jitter of the audio and video packet.

If the IPTV test item is an audio and video packet loss ratio test, the BTU will recognize packet loss by comparing the values of the sequence fields in the header of the packet received. Inconsecutive values of the sequence fields indicate packet loss, because in normal conditions, the values of the sequence fields of the audio and video packets are always consecutive, and change with a cycle between a maximum value and a minimum value in an ascending order. The packet loss ratio may be obtained by dividing the number of lost packets in a circle of the values of the sequence fields by the maximum value of the sequence.

If the IPTV test item is an IGMP delay test, the BTU may obtain the IGMP delay by calculating the time duration between the time of joining the multi-cast group through an IGMP and the time of receiving the first multi-cast audio and video packet.

When the IPTV VOD program is performed, the IGMP delay test can not be performed by the BTU; while the IPTV live media is performed, the abovementioned five tests can be performed by the BTU.

Blocks 509 to 510: The BTU quit the multi-cast group or the VOD program upon finishing the test item. Then the BTU sends an IPTV test result to the CTS, and the CTS returns the IPTV test result to the TOS. The TOS displays the IPTV test result on a Graphic User Interface (GUI) to the testers.

The foregoing is only embodiments of the present invention, and is not for use in limiting the present invention. Any modification, replacement or improvement made under the principles of the present invention is included in the protection scope thereof.

## Claims

1. A method for Internet Protocol Television, IPTV, test, comprising:
connecting to a user port to be tested of an IPTV access apparatus via an access matrix;
accessing an IP carrier network;
downloading channel information from an IPTV network;
receiving IPTV media contents according to the channel information; and
analyzing the channel information and the IPTV media contents, and generating an IPTV test result.

2. The method of Claim 1, wherein accessing an IP carrier network comprises:
accessing the IP carrier network through a Point to Point Protocol Over Ethernet, PPPOE, authentication; or
accessing the IP carrier network through a Dynamic Host Configuration Protocol, DHCP, authentication.

3. The method of Claim 1, wherein the channel information comprises a first channel list containing a Uniform Resource Locator, URL, of a channel, when an IPTV live media is played; and
receiving IPTV media contents according to the channel information comprises: interacting with the IPTV network according to the URL of the channel; obtaining a multi-cast address and a port number of the channel; and joining a multi-cast group according to the multi-cast address and the port number to receive the IPTV live media.

4. The method of Claim 1, wherein the channel information comprises a second channel list containing a multi-cast address and a port number of the channel, when an IPTV live media is played; and
receiving the IPTV media contents according to the channel information comprises:
joining a multi-cast group according to the multi-cast address and the port number of the channel to receive the IPTV live media.

5. The method of Claim 1, wherein the channel information comprises an IPTV video on demand, VOD, program URL, when an IPTV VOD program is played; and
receiving IPTV media contents according to the channel information comprises:
interacting, according to the IPTV VOD program URL, with an IPTV VOD program server via Real Time Streaming Protocol, RSTP;
receiving audio and video packets ordered.

6. The method of Claim 3 or Claim 4, wherein analyzing the channel information and the IPTV media contents and generating an IPTV test result comprises at least one of the following processes:
scanning channels in the channel list, marking channels providing the IPTV live media as active, and marking channels not providing live media as idle;
calculating at least one of a maximum rate, a minimum rate, and an average rate of audio and video packets over the channels in the channel list;
calculating a packet jitter of the audio and video packets over the channels in the channel list;
calculating a packet loss ratio of the audio and video packets over the channels in the channel list; and
calculating an Internet Group Management Protocol, IGMP , delay of the audio and video packets over the channels in the channel list.

7. The method of Claim 5, wherein analyzing the channel information and the IPTV broadcast contents and generating an IPTV test result comprises at least one of the following processes:
scanning channels indicated by the VOD program URL, marking channels providing the VOD program as active, and marking channels not providing VOD program as idle;
calculating at least one of a maximum rate, a minimum rate, and an average rate of the audio and video packets ordered;
calculating a packet jitter of the audio and video packets ordered;
calculating a packet loss ratio of the audio and video packets ordered.

8. The method of Claim 1, further comprising:
receiving, from a Control Center, a request for IPTV test items, before connecting to the user port to be tested of the IPTV access apparatus.

9. The method of Claim 1, further comprising:
sending the IPTV test result to a Control Center upon generating the IPTV test result.

10. A system for Internet Protocol Television, IPTV, test, comprising:
a test apparatus, configured to connect to a user port to be tested of an IPTV access apparatus via an access matrix, access an IP carrier network, download channel information from an IPTV network, receive IPTV media contents according to the channel information, analyze the channel information and the IPTV media contents, and generate an IPTV test result.

11. The system of Claim 10, further comprising:
a Control Center, configured to manage the test apparatus, receive test control information from a user, and control the test apparatus to implement an IPTV test according to the test control information.

12. The system of Claim 11, wherein the Control Center comprises a Test Operator Station, TOS, and a Centralized Test Server ,CTS;
the TOS is configured to receive the test control information from the user and output the test control information to the CTS; and
the CTS is configured to manage the test apparatus, and control the test apparatus to implement the IPTV test according to the test control information from the TOS.

13. The system of Claim 12, wherein the CTS comprises a standalone server.

14. The system of Claim 12, wherein the CTS comprises a server group including more than one server.

15. The system of Claim 14, wherein the CTS further comprises:
a load balancer, configured to perform load balancing among the servers.

16. The system of Claim 10, wherein the test apparatus comprises a Broadband Test Unit, BTU.

17. The system of any of Claims 10 to 16, further comprising: a Test Access Matrix, TAM, offering the test apparatus a broadband testing bus.

18. A test apparatus, comprising:
an access module, configured to access an Internet Protocol , IP , carrier network;
a receiving module, configured to download channel information from an Internet Protocol Television, IPTV, network, and receive IPTV media contents according to the channel information; and
a test module, configured to analyze the channel information and the IPTV media contents, and generate an IPTV test result.

19. The test apparatus of Claim 18, wherein the test module comprises at least one of the following modules:
a channel scanning test module, configured to scan channels in a channel list or channels indicated by video on demand, VOD, program Uniform Resource Locator, URL, mark channels providing IPTV live media or VOD program as active, and mark channels not providing IPTV live media or VOD program as idle;
an audio and video packet rate test module, configured to calculate a maximum rate, and/or a minimum rate, and/or an average rate of audio and video packets;
an audio and video packet jitter test module, configured to calculate a packet jitter of the audio and video packets;
an audio and video packet loss ratio test module, configured to calculate a packet loss ratio of the audio and video packets.

20. The test apparatus of Claim 19, wherein the test module further comprises:
an Internet Group Management Protocol, IGMP, delay test module, configured to calculate an IGMP delay of the audio and video packets of the IPTV live media.
